# FASCICULE DE BREVET EUROPEEN

(11) **EP 3 938 729 B1**
(45) Date de publication et mention de la délivrance du brevet: **01.03.2023**
(21) Numéro de dépôt: 20725873.2
(22) Date de dépôt: 11.03.2020
(51) Int. Cl.: F41G 11/00, F16F 15/02, F16F 15/04

(54) **SYSTÈME PASSIF D'AMORTISSEMENT DE CHOCS POUR UN APPAREIL DE VISÉE**
PASSIVES STOSSDÄMPFUNGSSYSTEM FÜR EINE VISIERVORRICHTUNG
PASSIVE SHOCK-ABSORBING SYSTEM FOR A SIGHTING APPARATUS

(30) Priorité: 14.03.2019 FR 1902596
(43) Date de publication de la demande: 19.01.2022
(73) Titulaire: IXBLUE, 78100 Saint-Germain-en-Laye (FR)
(72) Inventeur: CREPY, Bruno, 78100 Saint-Germain-en-Laye (FR)
(74) Mandataire: Jacobacci Coralis Harle
(86) Numéro de dépôt international: PCT/FR2020/050499
(87) Numéro de publication internationale: WO 2020/183106

(56) Documents cités:
- EP-B1- 2 891 009
- WO-A1-2017/109720
- DE-A1- 2 703 990
- US-A- 4 026 054
- US-A1- 2014 059 908
- Anonymous: "Théorie des mécanismes - Wikipédia", , 25 juillet 2018 (2018-07-25), XP055645791, Extrait de l'Internet: URL:https://fr.wikipedia.org/w/index.php?t itle=Théorie_des_mécanismes&oldid=15070180 3 [extrait le 2019-11-22]

## Description

### DOMAINE TECHNIQUE

La présente invention concerne de manière générale le domaine de la mécanique et de l'amortissement des chocs. Elle s'applique plus particulièrement à des appareils de visée montés au voisinage d'équipements générant des niveaux de chocs très important, lesdits équipements étant préférentiellement des systèmes d'armes. L'invention est toute particulièrement utile dans le domaine de la visée optique pour lequel les exigences de précision sont les plus importantes.

### ARRIERE-PLAN TECHNOLOGIQUE

Dans le cas d'un système d'arme générant des chocs importants à chaque tir, notamment dans le cas d'un canon, il est nécessaire, aussitôt le tir effectué, de disposer d'un moyen de visée harmonisé avec ledit canon pour acquérir de nouveau la cible et cela même en cas de tir en mode rafale.

Pour se faire, deux stratégies peuvent être utilisées.
- La première stratégie consiste à « durcir » le dispositif de visée afin qu'il soit robuste et le plus raide possible. Se faisant, le viseur devient plus lourd.
- La seconde stratégie consiste à utiliser un dispositif de filtrage passif de type « silentbloc » permettant d'absorber l'énergie du choc générée. La difficulté de ce type de dispositif de filtrage passif réside dans le fait qu'il doit réaliser le compromis suivant : d'une part, le dispositif doit présenter un niveau d'amortissement suffisant vis-à-vis des chocs que l'on veut filtrer, cet amortissement étant en général accompagné d'une déformation du dispositif de filtrage, et, d'autre part, présenter un niveau de précision dans le référencement identique avant et après les chocs.

On connaît par EP2 891 009 un système de vision par caméra doté d'un système permettant de réduire des contraintes permettant de ramener une caméra dans une position déterminée.

### EXPOSE DE L'INVENTION

Plus particulièrement, on propose selon l'invention un système passif d'amortissement de chocs du type trait-point-plan adapté au filtrage de chocs produits par un équipement du type système d'arme pour un appareil de visée dudit équipement.

L'invention consiste dans son principe à combiner les deux moyens matériels suivants :
- un montage « trait-point-plan » qui permet d'assurer un repositionnement précis entre le viseur et un support comportant l'équipement, que le viseur soit motorisé ou non, et
- des amortisseurs qui sont typiquement à base de ressorts et qui permettent de lier le support au viseur et de « ramener » le viseur dans sa position initiale de repos après le choc.

L'invention concerne plus spécifiquement un système passif d'amortissement de chocs pour un appareil de visée installé sur un dispositif comportant un équipement générant lesdits chocs, le système comportant deux plaques rigides sensiblement parallèles entre elles, dont une première plaque solidaire de la partie du dispositif comportant l'équipement et une seconde plaque solidaire de l'appareil de visée, les plaques étant reliées entre elles par un moyen de rappel en position permettant de ramener les plaques dans une position relative de repos déterminée après amortissement d'un choc.

Selon l'invention, le moyen de rappel en position comporte un moyen de positionnement trait-point-plan à billes entre les deux plaques et un ensemble d'organes élastiques de rappel reliant les deux plaques entre elles. Ces organes élastiques de rappel sont disposés perpendiculairement aux plans des deux plaques et/ou parallèlement à ces derniers et/ou obliquement par rapport à ces derniers.

D'autres caractéristiques non limitatives et avantageuses du système conforme à l'invention, prises individuellement ou selon toutes les combinaisons techniquement possibles, sont les suivantes :
- chaque plaque est plane et forme un plan correspondant à la dénomination « plan de la plaque » ou « plan des (deux) plaques » ou « plan de la seconde des deux plaques » et équivalents,
- les chocs sont des chocs impulsifs,
- l'équipement générateur de chocs est un système d'arme,
- l'équipement est un canon,
- l'équipement est un mortier,
- l'équipement est une mitrailleuse,
- le moyen de positionnement trait-point-plan comporte trois billes disposées entre les deux plaques et solidaires d'une première des deux plaques, une première bille pouvant se déplacer sur un plan de déplacement de la seconde des deux plaques, une deuxième bille pouvant se déplacer dans un cône ou trièdre creux de la seconde des deux plaques et une troisième bille pouvant se déplacer dans un vé creux ou sillon en V de la seconde des deux plaques,
- le plan de déplacement est un plan sur lequel une des billes peut se déplacer,
- le plan de déplacement de la seconde des deux plaques est une zone en creux de la seconde plaque, les bords de la zone en creux formant des butées au déplacement de la première bille,
- la zone en creux formant le plan de la seconde des deux plaques est en plein champ de la face interne de la seconde des deux plaques,
- le cône ou trièdre creux de la seconde des deux plaques est en plein champ de la face interne de la seconde des deux plaques,
- le vé creux ou sillon en V de la seconde des deux plaques est en plein champ de la face interne de la seconde des deux plaques,
- de préférence, le vé creux ou sillon en V de la seconde des deux plaques débouche en bordure de la seconde des deux plaques,
- les billes sont fixées et immobilisées à la première plaque,
- les billes sont fixées et immobilisées à la première plaque par collage, soudure ou un autre procédé équivalent,
- les billes fixées et immobilisées à la première plaque sont des excroissances de la face interne de la première plaque en forme de demi-sphère,
- les excroissances de la face interne de la première plaque en forme de demi-sphère sont obtenues par usinage ou un autre procédé équivalent,
- les billes fixées et immobilisées à la première plaque sont des sphères fixées dans des cavités hémisphériques de la face interne de la première plaque,
- les organes élastiques de rappel sont choisis parmi les ressorts métalliques et les blocs de matériaux élastomère ou des combinaisons de ressorts métalliques et de blocs de matériaux élastomère,
- les blocs de matériaux élastomère sont des « silentblocs »,
- les ressorts métalliques sont à enroulement en spirale, encore dits ressorts hélicoïdaux ou boudin, et au repos, en l'absence de choc, les spires des ressorts ne sont pas jointives,
- les organes élastiques longitudinaux comprennent des ressorts métalliques et des blocs de matériaux élastomère,
- au moins une partie de l'ensemble des organes élastiques de rappel est constituée d'organes élastiques transversaux disposés perpendiculairement aux plans des plaques, entre les deux plaques, chaque organe élastique transversal ayant deux extrémités et une première des deux extrémités est fixée à une première des deux plaques et la seconde des deux extrémités est fixée à la seconde des deux plaques,
- les organes élastiques transversaux à type de ressort métallique sont à enroulement en spirale, et en condition de repos, en l'absence de choc, les spires de certains des ressorts transversaux ne sont pas jointives et produisent un effort de traction tendant à rapprocher les plaques, et les spires des autres ressorts transversaux ne sont pas jointives et produisent un effort en compression tendant à éloigner les plaques, les efforts en traction et en compression des organes élastiques transversaux dans le système se compensant dans ladite condition de repos,
- chaque plaque comporte au moins une surface d'appui perpendiculaire au plan de la plaque, et au moins une partie de l'ensemble des organes élastiques de rappel est constituée d'organes élastiques longitudinaux, chaque organe élastique longitudinal étant disposé parallèlement aux plans des plaques, entre deux surfaces d'appui des deux plaques, chaque organe élastique longitudinal ayant deux extrémités et une première des deux extrémités est fixée à une surface d'appui d'une première des deux plaques et la seconde des deux extrémités est fixée à une surface d'appui de la seconde des deux plaques,
- chaque plaque comporte au moins une paire de surfaces d'appui perpendiculaires au plan de la plaque et à + et - 45° de la direction prédominante déterminée ou moyenne selon le cas, et au moins une partie de l'ensemble des organes élastiques de rappel est constituée de deux organes élastiques longitudinaux agencés en V et à + et - 45° de la direction prédominante déterminée ou moyenne selon le cas, chaque organe élastique agencé en V étant disposé dans un plan parallèle à la direction prédominante déterminée ou moyenne selon le cas et entre les surfaces d'appui des deux plaques,
- les organes élastiques sont configurés de manière à s'opposer à une rotation de la première plaque par rapport à la seconde plaque,
- les organes élastiques longitudinaux sont plus particulièrement configurés de manière à s'opposer à une rotation de la première plaque par rapport à la seconde plaque,
- au moins deux organes élastiques longitudinaux sont disposés perpendiculairement entre eux,
- les organes élastiques longitudinaux sont configurés par paire(s), les deux organes élastiques longitudinaux de la paire étant perpendiculaires entre eux,
- les organes élastiques longitudinaux et transversaux à type de ressort métallique sont à enroulement en spirale, et en condition de repos, en l'absence de choc, les spires des ressorts longitudinaux ne sont pas jointives et produisent un effort nul en traction ou compression sur les surfaces d'appui,
- les organes élastiques longitudinaux à type de ressort métallique sont à enroulement en spirale, et en condition de repos, en l'absence de choc, les spires de certains des ressorts longitudinaux ne sont pas jointives et produisent un effort de traction tendant à rapprocher les surfaces d'appui, et les spires d'autres ressorts longitudinaux ne sont pas jointives et produisent un effort de compression tendant à éloigner les surfaces d'appui, les efforts en traction et en compression des organes élastiques longitudinaux dans le système se compensant dans ladite condition de repos,
- les deux plaques ont des bords périphériques,
- les bords périphériques des deux plaques sont sensiblement parallèles entre eux,
- au moins une partie des d'organes élastiques transversaux est disposée vers les bords périphériques des deux plaques,
- au moins une partie des d'organes élastiques longitudinaux est disposée vers les bords périphériques des deux plaques,
- le moyen de positionnement trait-point-plan et l'ensemble d'organes élastiques de rappel comportent des matériaux et/ou sont structurés afin de réduire les effets de la dilatation due aux variations de température,
- les trois billes sont réalisées avec un même matériau,
- le système est étanche à l'eau et aux poussières.

L'invention concerne également un dispositif comportant un équipement générant des chocs et un appareil de visée, ledit dispositif comporte un système passif d'amortissement des chocs, pour l'appareil de visée, et qui est tel que décrit.

D'autres caractéristiques non limitatives et avantageuses du dispositif conforme à l'invention, prises individuellement ou selon toutes les combinaisons techniquement possibles, sont les suivantes :
- l'appareil de visée comporte une base et la base de l'appareil de visée est fixée sur une des deux plaques, l'autre plaque étant fixée sur la partie du dispositif comportant l'équipement générant les chocs,
- l'équipement générant les chocs produit, lors des chocs, des déplacements du dispositif qui ont une direction prédominante déterminée, et les plaques sont disposées sensiblement parallèlement à ladite direction prédominante déterminée,
- la direction prédominante déterminée est constante par rapport à la base de l'appareil de visée,
- l'appareil de visée comporte une tête de visée orientable par rapport à sa base,
- l'équipement générant les chocs est orientable et produit, lors des chocs, des déplacements du dispositif qui ont des directions prédominantes déterminées variables selon l'orientation de l'équipement, et les plaques sont disposées de manière à suivre l'orientation de l'équipement et afin que et les plaques restent sensiblement parallèle à chaque direction prédominante déterminée,
- l'équipement générant les chocs est orientable et produit, lors des chocs, des déplacements du dispositif qui ont des directions prédominantes déterminées variables selon l'orientation de l'équipement, lesdites directions prédominantes déterminées variables permettant de définir une direction moyenne et les plaques sont disposées sensiblement parallèlement à la direction moyenne,
- la direction moyenne est choisie dans la direction des chocs les plus importants,
- la direction prédominante déterminée est variable par rapport à la base de l'appareil de visée,
- la direction principale du vé creux ou sillon en V est parallèle à la direction prédominante déterminée ou moyenne selon le cas,
- le système comporte des organes élastiques longitudinaux et au moins un des organes élastiques longitudinaux est parallèle à la direction prédominante déterminée ou moyenne selon le cas,
- les chocs sont répétitifs, et le système est configuré afin que le temps de retour dans une zone d'extension déterminée autour de la position relative de repos soit inférieur au temps minimal séparant deux chocs successifs,
- la zone d'extension déterminée est une sphère de rayon inférieur ou égal à 10 µm autour de la position relative de repos.

Le système proposé permet un référencement précis en position et en direction, typiquement meilleurs que quelques centaines de µm en position et de quelques centaines de µrad en direction, afin d'harmoniser la ligne de visée d'un viseur par rapport à un dispositif comportant un générateur de chocs et supportant le viseur. Ce système permet de maintenir le référencement pendant des cycles de vibrations correspondant à un ou des tirs du système d'arme. Grâce à l'invention, l'appareil de visée pourra être monté sur le système d'arme et/ou sur un véhicule motorisé.

### Brève description des dessins

La Fig. 1 représente une vue schématique de face d'un système d'arme avec viseur installé par l'intermédiaire du système passif d'amortissement de chocs de l'invention,
La Fig. 2 représente schématiquement le principe de la disposition des organes élastiques transversaux étendus entre les deux plaques, perpendiculairement aux plans des deux plaques,
La Fig. 3 représente schématiquement le principe de la disposition des organes élastiques longitudinaux, chaque organe élastique longitudinal étant disposé parallèlement aux plans des deux plaques, entre deux surfaces d'appui des deux plaques, et
La Fig. 4 représente schématiquement le principe de la disposition des organes élastiques diagonaux étendus entre les deux plaques
La Fig. 5 représente schématiquement une vue en éclaté et perspective des deux plaques à moyen de positionnement trait-point-plan à billes, les organes élastiques de rappel ayant été omis pour simplifier la figure, et
La Fig. 6 représente en vue frontale, parallèlement aux plans des deux plaques, les deux plaques de la figure 5.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

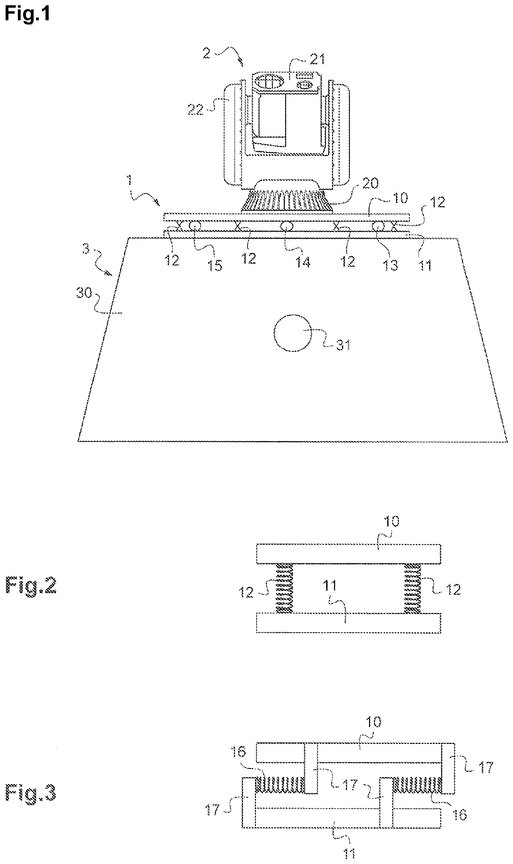

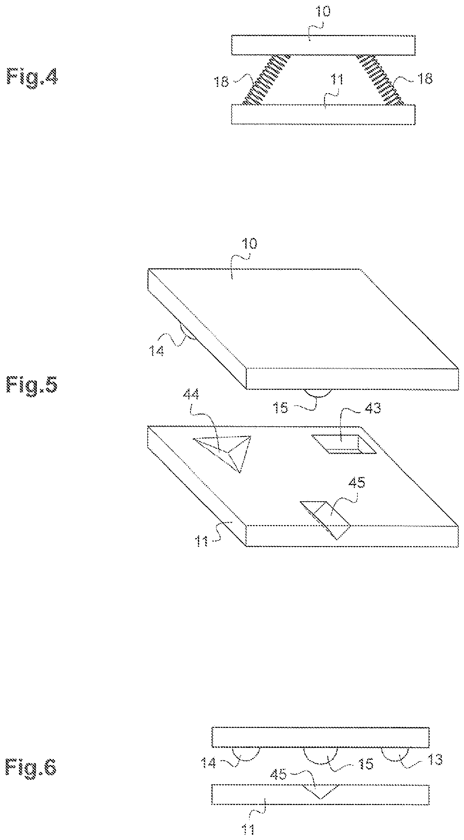

Sur la figure 1 est représenté un dispositif 3 comportant un appareil de visée 2 motorisé qui est disposé sur un support 30 de canon 31. L'appareil de visée 2 est installé sur ce support 30 par l'intermédiaire d'un système passif d'amortissement 1 de chocs qui comporte :
- deux plaques 10, 11 rigides usinées comprenant entre elles :
   - des ressorts 12 transversaux et 16 longitudinaux (ces derniers non représentés sur la figure 1) reliant les deux plaques 10, 11 entre elles et permettant de ramener les plaques, à la suite à d'un choc, dans une position définie l'une par rapport à l'autre, et
   - trois billes 13, 14, 15 solidaires d'une première 10 des deux plaques 10, 11 et disposées entre les deux plaques. La première bille 13 peut se déplacer sur un plan de déplacement 43 de la seconde 11 plaque, la deuxième 14 bille est reçue dans un cône en creux ou trièdre 44 de la seconde 11 plaque et la troisième 15 bille est reçue dans un vé creux ou sillon en V 45, encore dit « V-groove » de la seconde 11 plaque. Le cône 44 et/ou le « V-groove » 45 peuvent être rapportés sur la seconde 11 plaque ou être réalisés dans la seconde 11 plaque. De préférence, le plan de déplacement 43 est en creux et ses bords forment une butée à l'excursion de la première 13 bille. On peut voir plus précisément sur les figures 5 et 6 la structure des deux plaques 10, 11 et le montage « trait-point-plan ».

L'appareil de visée 2 comporte une base 20 fixée sur une des plaques, la plaque 10 sur la figure 1, l'autre plaque 11 étant fixée sur le support 30. L'appareil de visée 2 comporte une tête 21 de visée qui est montée, motorisée, sur deux bras 22.

Dans cet exemple de la figure 1, le canon 31 et le support 30 restent dans une relation d'orientation constante et les chocs ont donc toujours la même direction prédominante déterminée pour le support et aussi pour la base 20 de l'appareil de visée 2. Cette direction prédominante déterminée dans l'axe du canon pointe donc vers l'observateur de la figure 1 et les deux plaques 10 et 11 sont parallèles à cette direction prédominante déterminée.

Dans d'autres modalités de réalisation, le canon 31 peut être orientable par rapport au support et donc par rapport à la base 20 de l'appareil de visée 2 et donc les chocs peuvent avoir diverses directions prédominantes déterminées par rapport au support 30 et à la base de l'appareil de visée 2. Dans un tel cas, il est préférable de déterminer une direction moyenne des chocs et de placer les plaques parallèlement à cette direction moyenne. Dans une variante, on peut mettre en œuvre des moyens pour que les plaques restent sensiblement parallèles aux directions prédominantes des chocs lors des différentes orientations du canon 31.

On peut cependant noter que le système d'amortissement et de repositionnement proposé est suffisamment efficace pour pouvoir fonctionner dans d'autres positions des plaques que parallèles aux directions des chocs.

Etant donné que les systèmes d'arme générant des chocs sont généralement également soumis à des vibrations, il est souhaitable que pendant les vibrations et qu'avant et après les chocs, le dispositif assure un repositionnement très précis. Dans ce but, les ressorts sont choisis de façon que la force de rappel soit nettement supérieure à la force d'éjection provoquée par les accélérations linéaires induites pendant les vibrations. En revanche pendant un choc, le système est sollicité et mis en mouvement et le montage trait-point-plan utilisé ramène les deux plaques en vis-à-vis dans la même position et la même direction qu'initiales.

Deux types de ressorts peuvent être utilisés simultanément ou séparément, des ressorts transversaux comme schématisé figure 2 et des ressorts longitudinaux comme schématisé figure 3. Etant donné que les ressorts longitudinaux sont parallèles aux plans des deux plaques, des surfaces d'appui 17, perpendiculaires aux plans des deux plaques, sont réalisées pour recevoir les extrémités des ressorts longitudinaux, pour un ressort donné une de ses deux surfaces d'appui est sur une première des deux plaques et la seconde surface d'appui des deux et sur la seconde des deux plaques. De préférence, les ressorts longitudinaux sont parallèles à la direction prédominante déterminée ou moyenne. Dans le cas où la direction des chocs peut varier, on peut prévoir une disposition de paires de ressorts en V à +/-45° de la direction moyenne des chocs. Les ressorts, en particulier longitudinaux, sont aussi utiles pour limiter la rotation des plaques entre elles.

Dans d'autres modalités de mise en oeuvre, les ressorts peuvent être disposés en diagonale par rapport aux deux plans des deux plaques comme représenté sur la figure 4.

Chacune des deux extrémités de chaque ressort peut être solidarisés à la plaque correspondante ou ne pas y être solidarisée mais dans tous les cas, on fait en sorte que les chocs ne provoquent pas l'éjection ou le déplacement intempestif des ressorts.

Du fait de la structure du moyen de positionnement trait-point-plan et de l'existence d'un certain niveau de frottement entre les éléments du système, l'énergie du choc se dissipe rapidement et le système permet de ramener rapidement les deux plaques en vis-à-vis dans la même position et la même direction qu'initiales.

On comprend que l'invention peut être mise en oeuvre d'autres manières, par exemple avec des éléments en élastomère à la place des ressorts, selon d'autres orientations des ressorts par rapport aux plaques, notamment en associant des ressorts perpendiculaires et/ou parallèles et/ou obliques par rapport aux plans des deux plaques et/ou par rapport à la direction des chocs.

## Revendications

1. Système (1) passif d'amortissement de chocs pour un appareil de visée (2) installé sur un dispositif (3, 30) comportant un équipement (31) générant lesdits chocs, le système (1) comportant deux plaques (10, 11) rigides sensiblement parallèles entre elles, dont une première plaque (11) solidaire de la partie du dispositif (3, 30) comportant l'équipement (31) et une seconde plaque (10) solidaire de l'appareil de visée (2), les plaques (10, 11) étant reliées entre elles par un moyen de rappel en position permettant de ramener les plaques (10, 11) dans une position relative de repos déterminée après amortissement d'un choc, **caractérisé en ce que** le moyen de rappel en position comporte un moyen de positionnement trait-point-plan à billes (13, 14, 15) entre les deux plaques (10, 11) et un ensemble d'organes élastiques de rappel (12, 16) reliant les deux plaques (10, 11) entre elles.

2. Système (1) selon la revendication 1, **caractérisé en ce que** le moyen de positionnement trait-point-plan comporte trois billes (13, 14, 15) disposées entre les deux plaques (10, 11) et solidaires d'une première (10) des deux plaques (10, 11), une première bille (13) pouvant se déplacer sur un plan de déplacement (43) de la seconde (11) des deux plaques (10, 11), une deuxième bille (14) pouvant se déplacer dans un cône ou trièdre (44) creux de la seconde (11) des deux plaques (10, 11) et une troisième bille (15) pouvant se déplacer dans un vé creux ou sillon en V (45) de la seconde (11) des deux plaques (10, 11).

3. Système (1) selon l'une quelconque des revendications précédentes, **caractérisé en ce que** les organes élastiques de rappel (12, 16) sont choisis parmi les ressorts métalliques et les blocs de matériaux élastomère ou des combinaisons de ressorts métalliques et de blocs de matériaux élastomère.

4. Système (1) selon l'une quelconque des revendications précédentes, **caractérisé en ce qu'**au moins une partie de l'ensemble des organes élastiques de rappel (12) est constituée d'organes élastiques transversaux disposés perpendiculairement aux plans des plaques (10, 11), entre les deux plaques (10, 11), chaque organe élastique transversal ayant deux extrémités et une première des deux extrémités est fixée à une première des deux plaques et la seconde des deux extrémités est fixée à la seconde des deux plaques.

5. Système (1) selon l'une quelconque des revendications précédentes, **caractérisé en ce que** chaque plaque (10, 11) comporte au moins une surface d'appui (17) perpendiculaire au plan de la plaque, et **en ce qu'**au moins une partie de l'ensemble des organes élastiques de rappel est constituée d'organes élastiques longitudinaux, chaque organe élastique longitudinal étant disposé parallèlement aux plans des plaques, entre deux surfaces d'appui (17) des deux plaques (10, 11), chaque organe élastique longitudinal ayant deux extrémités et une première des deux extrémités est fixée à une surface d'appui (17) d'une première des deux plaques et la seconde des deux extrémités est fixée à une surface d'appui (17) de la seconde des deux plaques.

6. Système (1) selon la revendication 5, **caractérisé en ce qu'**au moins deux organes élastiques longitudinaux sont disposés perpendiculairement entre eux.

7. Dispositif (3, 30) comportant un équipement (31) générant des chocs et un appareil de visée (2), ledit dispositif comportant un système (1) passif d'amortissement des chocs pour l'appareil de visée (2) qui est selon l'une quelconque des revendications précédentes.

8. Dispositif (3, 30) selon la revendication 7, **caractérisé en ce que** l'équipement (31) générant les chocs produit, lors des chocs, des déplacements du dispositif (3, 30, 31) qui ont une direction prédominante déterminée, et **en ce que** les plaques (10, 11) sont disposées sensiblement parallèlement à ladite direction prédominante déterminée.

9. Dispositif (3, 30) selon la revendication 7, **caractérisé en ce que** l'équipement (31) générant les chocs est orientable et produit, lors des chocs, des déplacements du dispositif (3, 30, 31) qui ont des directions prédominantes déterminées variables selon l'orientation de l'équipement, lesdites directions prédominantes déterminées variables permettant de définir une direction moyenne et **en ce que** les plaques (10, 11) sont disposées sensiblement parallèlement à la direction moyenne.

10. Dispositif (3, 30) selon l'une des revendications 8 et 9, **caractérisé en ce que** la direction principale du vé creux ou sillon en V est parallèle à la direction prédominante déterminée ou moyenne selon le cas.

11. Dispositif (3, 30) selon l'une des revendications 8, 9 et 10, **caractérisé en ce que** le système comporte des organes élastiques longitudinaux et qu'au moins un des organes élastiques longitudinaux est parallèle à la direction prédominante déterminée ou moyenne selon le cas.

## Patentansprüche

1. Passives Stoßdämpfungssystem (1) für eine auf einer ein die Stöße erzeugendes Gerät (31) aufweisenden Vorrichtung (3, 30) installierte Visiervorrichtung (2), wobei das System (1) zwei steife, im Wesentlichen zueinander parallele Platten (10, 11) aufweist, von denen eine erste Platte (11) mit dem das Gerät (31) aufweisenden Teil der Vorrichtung (3, 30) fest verbunden ist und eine zweite Platte (10) mit der Visiervorrichtung (2) fest verbunden ist, wobei die Platten (10, 11) mittels eines Rückstellmittels, das ermöglicht, die Platten (10, 11) nach Dämpfung eines Stoßes in eine relative Ruhestellung zurückzustellen, miteinander verbunden sind, **dadurch gekennzeichnet, daß** das Mittel zum Zurückstellen in die Position ein Lord-Kelvin'sches "Punkt-Strich-Ebene"-Positioniermittel (13, 14, 15) zwischen den Platten (10, 11) und eine Gesamtheit von elastischen, die beiden Platten (10, 11) miteinander verbindenden Rückstellorganen (12, 16) aufweist.

2. System (1) gemäß Anspruch 1, **dadurch gekennzeichnet, daß** das "Punkt-Strich-Ebene"-Positioniermittel drei zwischen den beiden Platten (10, 11) angeordnete und mit einer ersten (10) der beiden Platten (10, 11) verbundene Kugeln (13, 14, 15) aufweist, wobei sich eine erste Kugel (13) auf einer Bewegungsebene (43) der zweiten (11) der beiden Platten (10, 11) bewegen kann, eine zweite Kugel (14) sich in einem Konus oder hohlen Trieder (44) der zweiten (11) der beiden Platten (10, 11) bewegen kann und eine dritte Kugel (15) sich in einem hohlen V oder einer V-förmigen Rinne (45) der zweiten (11) der beiden Platten (10, 11) bewegen kann.

3. System (1) gemäß einem der vorangehenden Ansprüche, **dadurch gekennzeichnet, daß** die elastischen Rückstellorgane (12, 16) aus den Metallfedern und den Blöcken aus Elastomermaterial oder Kombinationen aus Metallfedern und Blöcken aus Elastomermaterial ausgewählt sind.

4. System (1) gemäß einem der vorangehenden Ansprüche, **dadurch gekennzeichnet, daß** mindestens ein Teil (12) der Gesamtheit von elastischen Rückstellorganen aus quer verlaufenden elastischen Organen besteht, die zwischen den Platten (10, 11) senkrecht zu den Ebenen der Platten (10, 11) angeordnet sind, wobei jedes elastische quer verlaufende Organ zwei Enden aufweist und ein erstes der beiden Enden an einer ersten der beiden Platten und das zweite der beiden Enden an der zweiten der beiden Platten befestigt ist.

5. System (1) gemäß einem der vorangehenden Ansprüche, **dadurch gekennzeichnet, daß** jede Platte (10, 11) mindestens eine zur Ebene der Platte senkrechte Auflagefläche (17) aufweist und daß mindestens ein Teil der elastischen Rückstellorgane aus länglichen elastischen Organen besteht, wobei jedes längliche elastische Organ zwischen zwei Auflageflächen (17) der beiden Platten (10, 11) parallel zu den Ebenen der Platten angeordnet ist, wobei jedes längliche elastische Organ zwei Enden aufweist und ein erstes der beiden Enden an einer Auflagefläche (17) einer ersten der beiden Platten und das zweite der beiden Enden an einer Auflagefläche (17) der zweiten der beiden Platten befestigt ist.

6. System (1) gemäß Anspruch 5, **dadurch gekennzeichnet, daß** mindestens zwei längliche elastische Organe zueinander senkrecht angeordnet sind.

7. Vorrichtung (3, 30) mit einem Stöße erzeugenden Gerät (31) und einer Visiervorrichtung (2), wobei die Vorrichtung ein passives Stoßdämpfungssystem (1) für die Visiervorrichtung (2) gemäß einem der vorangehenden Ansprüche aufweist.

8. Vorrichtung (3, 30) gemäß Anspruch 7, **dadurch gekennzeichnet, daß** das die Stöße erzeugende Gerät (31) beim Erzeugen der Stöße Verlagerungen der Vorrichtung (3, 30, 31) bewirkt, die eine bestimmte Hauptrichtung haben, und daß die Platten (10, 11) im Wesentlichen parallel zu dieser bestimmten Hauptrichtung angeordnet sind.

9. Vorrichtung (3, 30) gemäß Anspruch 7, **dadurch gekennzeichnet, daß** das die Stöße erzeugende Gerät (31) orientierbar ist und bei den Stößen Verlagerungen der Vorrichtung (3, 30, 31) bewirkt, die verschiedene, der Orientierung des Geräts gemäße bestimmte Hauptrichtungen haben, wobei die verschiedenen bestimmten Hauptrichtungen ermöglichen, eine mittlere Richtung zu bestimmen, und daß die Platten (10, 11) im Wesentlichen parallel zu der mittleren Richtung angeordnet sind.

10. Vorrichtung (3, 30) gemäß einem der Ansprüche 8 und 9, **dadurch gekennzeichnet, daß** die Hauptrichtung des hohlen V oder der V-förmigen Rinne je nach Fall zur bestimmten Hauptrichtung oder zur mittleren Richtung parallel ist.

11. Vorrichtung (3, 30) gemäß einem der Ansprüche 8, 9 und 10, **dadurch gekennzeichnet, daß** das System längliche elastische Organe aufweist und daß mindestens eins der länglichen elastischen Organe je nach Fall zur bestimmten Hauptrichtung oder zur mittleren Richtung parallel ist.

## Claims

1. A passive shock-absorbing system (1) for a sighting apparatus (2) installed on a device (3, 30) comprising equipment (31) generating said shocks, the system (1) comprising two rigid plates (10, 11) substantially parallel to each other, including a first plate (11) secured to the part of the device (3, 30) that comprises the equipment (31) and a second plate (10) secured to the sighting apparatus (2), the plates (10, 11) being connected to each other by a position return means for returning the plates (10, 11) to a determined relative rest position after absorbing a shock, **characterized in that** the position return means comprises a line-point-plane positioning means with balls (13, 14, 15) between the two plates (10, 11) and a set of elastic return members (12, 16) connecting the two plates (10, 11) to each other.

2. The system (1) according to claim 1, **characterized in that** the line-point-plane positioning means comprises three balls (13, 14, 15) placed between the two plates (10, 11) and secured to a first (10) of the two plates (10, 11), a first ball (13) being able to move on a moving plane (43) of the second (11) of the two plates (10, 11), a second ball (14) being able to move in a hollow cone or trihedron (44) of the second (11) of the two plates (10, 11) and a third ball (15) being able to move in a hollow V or V-shaped groove (45) of the second (11) of the two plates (10, 11).

3. The system (1) according to any one of the preceding claims, **characterized in that** the elastic return members (12, 16) are chosen among metal springs and elastomeric material blocks or combinations of metal springs and elastomeric material blocks.

4. The system (1) according to any one of the preceding claims, **characterized in that** at least part of the set of elastic return members (12) is consisted of transverse elastic members arranged perpendicular to the planes of the plates (10, 11), between the two plates (10, 11), each transverse elastic member having two ends, a first of the two ends being fastened to a first of the two plates and the second of the two ends being fastened to the second of the two plates.

5. The system (1) according to any one of the preceding claims, **characterized in that** each plate (10, 11) comprises at least one bearing surface (17) perpendicular to the plane of the plate, and **in that** at least part of the set of elastic return members is consisted of longitudinal elastic members, each longitudinal elastic member being arranged parallel to the planes of the plates, between two bearing surfaces (17) of the two plates (10, 11), each longitudinal elastic member having two ends, a first of the two ends being fastened to a bearing surface (17) of a first of the two plates and the second of the two ends being fastened to a bearing surface (17) of the second of the two plates.

6. The system (1) according to claim 5, **characterized in that** at least two longitudinal elastic members are arranged perpendicular to each other.

7. A device (3, 30) comprising equipment (31) generating shocks and a sighting apparatus (2), said device comprising a passive shock-absorbing system (1) for the sighting apparatus (2), that is according to any one of the preceding claims.

8. The device (3, 30) according to claim 7, **characterized in that** the equipment (31) generating the shocks produces, during the shocks, movements of the device (3, 30, 31) that have a determined predominant direction, and **in that** the plates (10, 11) are positioned substantially parallel to said determined predominant direction.

9. The device (3, 30) according to claim 7, **characterized in that** the equipment (31) generating the shocks is adjustable and produces, during the shocks, movements of the device (3, 30, 31) that have variable determined predominant directions according to the equipment adjustment, said variable determined predominant directions making it possible to define a mean direction and **in that** the plates (10, 11) are positioned substantially parallel to the mean direction.

10. The device (3, 30) according any one of claims 8 and 9, **characterized in that** the main direction of the hollow V or V-shaped groove is parallel to the determined predominant direction or mean direction according to the case.

11. The device (3, 30) according any one of claims 8, 9 and 10, **characterized in that** the system comprises longitudinal elastic members and that at least one of the longitudinal elastic members is parallel to the determined predominant direction or mean direction according to the case.
